# EUROPÄISCHE PATENTANMELDUNG

(11) **EP 1 452 443 A1**
(43) Veröffentlichungstag der Anmeldung: **01.09.2004**
(21) Anmeldenummer: 03004089.3
(22) Anmeldetag: 25.02.2003
(51) Int. Cl.: B64D 11/00, G09F 13/20

(54) **Notbeleuchtung in einem mehrstöckigen Flugzeug**

(71) Anmelder: Lufthansa Technik AG, 22335 Hamburg (DE)
(72) Erfinder: Lierow, Hans-Christian, 22339 Hamburg (DE)
(74) Vertreter: Glawe, Delfs, Moll & Partner

(57) **Zusammenfassung**

Flugzeug mit mehreren übereinander angeordneten Decks (7) für Passagiere, Fracht und/oder Besatzung und mindestens einer Decks verbindenden Treppe (1,2,3), zeichnet sich dadurch aus, dass die Treppe (1,2,3) mit photoluminiszenten Markierungen (4,5) versehen ist. Dadurch wird Passagieren und Besatzung im Notfall die Orientierung zum Ausgang erleichtert.

## Beschreibung

Die Erfindung betrifft ein Flugzeug mit mehreren übereinander angeordneten Decks für Passagiere, Fracht und/oder Besatzung und mindestens einer Decks verbindenden Treppe gemäß dem Oberbegriff von Anspruch 1.

In Flugzeugen ist es bekannt, in den Gängen linienförmig Leuchten anzuordnen, die im Notfalle eingeschaltet werden, um den Passagieren den Weg zum Notausgang zu zeigen. Diese Systeme werden zwar von einer getrennten Notstrombatterie gespeist, so daß die Markierungen auch im Falle des Versagens der übrigen Bordelektrik funktionieren. Auch die Notstromversorgung kann aber beschädigt werden, so daß die Markierung im Notfall nicht mehr eingeschaltet werden können. Auch können Abschnitte der Markierungen nicht betreibbar sein, was vor dem Start des Flugzeugs ein Auswechseln erforderlich macht, was wiederum zu Startverzögerungen und Verspätungen Anlaß gibt.

Es ist bekannt, zur Vermeidung dieser Nachteile am Fußboden seitlich an den Gängen Leuchtstreifen oder -leisten mit photoluminiszenten Stoffen anzubringen, die im Notfall auch bei Versagen der Elektrik des Flugzeugs den Passagieren den Weg zum Ausgang weisen können (EP 0 828 657 B1). Die photoluminiszenten Materialien haben die Eigenschaft, auch einige Zeit, nachdem sie nicht mehr beleuchtet werden, noch selbst zu leuchten.

Es ist ein Flugzeug mit mehreren übereinander angeordneten Decks für Passagiere, Fracht- und/oder Besatzung und mindestens einer Decks verbindenden Treppe bekannt, die mit photoluminiszenten leisten- oder streifenförmigen Markierungen versehen ist, die auf den Treppenstufen beidseitig an deren seitlichen Enden angeordnet sind (US-A-5 775 016).

Der Erfindung liegt die Aufgabe zugrunde, ein Flugzeug der eingangs genannten Art so auszurüsten, daß alle Passagiere/Besatzungsmitglieder, also auch Passagiere und Besatzungsmitglieder, die sich in verschiedenen Decks befinden, den Weg zu einem Notausgang sicher finden.

Die erfindungsgemäße Lösung besteht darin, daß von oben sichtbare im wesentlichen ununterbrochene linienförmige Markierungen seitlich von den Stufen, der Steigung der Treppe folgend, angeordnet sind. Diese geneigten geraden Markierungen leiten die Passagiere psychologisch besonders günstig in die richtige Richtung. Gleichzeitig erkennen die Passagiere auch in Notsituationen und schlechten Sichtbedingungen zwei verschiedene konvergierende Linien bzw. Linienscharen, wobei die durchgehenden und die auf den Treppenstufen angeordneten Markierungen in einem Winkel zueinander angeordnet sind, wenn sowohl die Markierungen auf den seitlichen Enden der Stufen als auch die geradlinigen Schrägen der Steigen der Stufen folgenden Markierungen vorgesehen sind. Der Passagier erkennt auf diese Weise sofort, daß er es mit einer Treppe und nicht etwa einem Gang zu tun hat. Dies kann auch ganz wesentlich sein, wenn das Flugzeug nach einem Unfall nicht mehr horizontal ausgerichtet ist.

Falls die Treppe einen Treppenabsatz aufweist, so sind zweckmäßiger Weise auch im Bereich des Treppenabsatzes Markierungen vorgesehen.

Es kann weiter zweckmäßig sein, Markierungen unterschiedlicher Farbe und Leuchtkraft zu verwenden. Durch solche anders gearteten Markierungen kann zum Beispiel besonders auf den Anfang der Treppe, das Ende der Treppe oder einen Absatz hingewiesen werden.

Die Erfindung kann wie erwähnt bei Treppen mit oder ohne Absatz verwendet werden. Sie kann nicht nur bei Treppen verwendet werden, die einen geradlinigen Verlauf haben, sondern auch bei Wendeltreppen. In diesem Falle ist die eine durchgehende seitliche Markierung am Außenumfang der Treppe und die andere ununterbrochene Markierung an der Säule der Wendeltreppe vorgesehen.

Auf den Markierungen sind zweckmäßigerweise Hinweise wie Pfeile, andere Symbole oder Beschriftungen wie "EXIT", "STAIRS" und dergleichen vorgesehen.

Die Erfindung wird im folgenden anhand von vorteilhaften Ausführungsformen unter Bezugnahme auf die beigefügten Zeichnungen beispielsweise beschrieben. Es zeigen:
- Fig.1: in perspektivischer Ansicht einen Abschnitt einer in einem Flugzeug angeordneten Treppe; und
- Fig.2: eine andere Ausführungsform einer solchen Treppe.

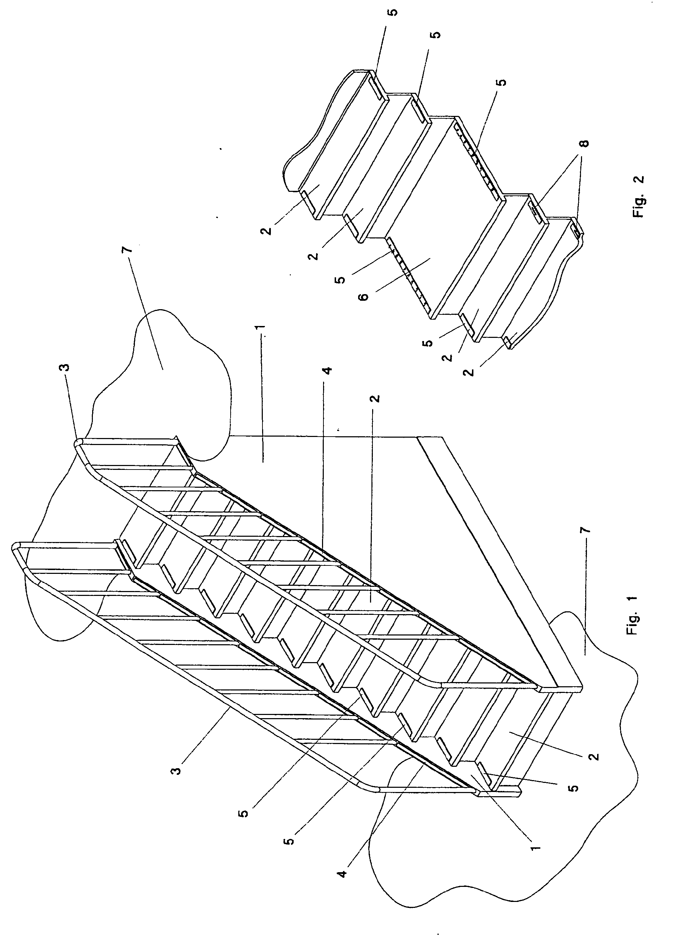

Die in Figur 1 gezeigte Treppe, die zwei bei 7 angedeutete Decks verbindet, weist seitliche Wandungen 1 auf, zwischen denen die Stufen 2 der Treppe angeordnet sind. Die Wandungen 1 ragen bei der in Figur 1 gezeigten Ausführungsform noch oben über die Stufen 2 hinaus. Auf ihnen sind Geländer 3 befestigt. Auf den Oberkanten der Wandungen 1 sind streifenförmige photoluminiszente Markierungen 4 angebracht. Diese "laden sich" mit Licht während des normalen Betriebs des Flugzeugs auf, wenn die Beleuchtung im Flugzeug eingeschaltet ist. Wird die Beleuchtung ausgeschaltet oder fällt sie wie im Notfall aus, so haben die photoluminiszenten Markierungen die Eigenschaft, noch eine gewisse Zeit nachzuleuchten, so daß sie Passagieren den Weg zum Ausgang zeigen können.

Die Markierungen 4 müssen nicht oben, sondern können auch innen an Wandung 1 angeordnet sein. Markierungen 4 sind aber nicht nur auf den Wandungen 1 vorgesehen, sondern auch an den seitlichen Enden der Stufen 2. Diese Markierungen sind in Figur 1 mit der Bezugsziffer 5 bezeichnet. Die geradlinig verlaufenden schräg abfallenden Markierungen 4 bilden einen Winkel mit den auf den Stufen 2 angeordneten Markierungen 5, so daß der Passagier sofort erkennen kann, daß er es mit einer Treppe zu tun hat.

Bei der in Figur 2 gezeigten Ausführungsform weist die Treppe zusätzlich zu den Stufen 2 auch einen Absatz 6 auf. Sowohl die Stufen 2 als auch der Absatz 6 sind dabei durch seitliche photoluminiszente Markierungen 5 gekennzeichnet. Dabei weisen die Markierungen 5 im Bereich des Absatzes 6 eine andere Farbe und/oder Leuchtkraft auf, was in Figur 2 durch eine Strichelung angedeutet ist. Durch diesen Unterschied in der Farbe und/oder der Leuchtkraft wird deutlicher gemacht, daß hier ein Absatz vorhanden ist. Gerade im Notfall mit der streßbedingten oder sogar panikartigen Situation kann dieses besondere Merkmal von besonderer Bedeutung sein. Bei 8 sind noch Hinweise wie Pfeile, Beschriftungen und dergleichen auf den Markierungen 5 angedeutet.

## Patentansprüche

1. Flugzeug mit mehreren übereinander angeordneten Decks (7) für Passagiere, Fracht und/oder Besatzung und mindestens einer Decks verbindenden Treppe (1,2,3), die mit photoluminiszenten leisten- oder streifenförmigen Markierungen (4,5) versehen ist, die auf den Treppenstufen (2) beidseitig an deren seitlichen Enden angeordnet sind, **dadurch gekennzeichnet, dass** von oben sichtbare im wesentlichen ununterbrochene Markierungen (4) an den Seiten der Stufen (2), der Steigung der Treppe (1,2,3) folgend angeordnet sind.

2. Flugzeug nach Anspruch 1, **dadurch gekennzeichnet, dass** die Treppe (1,2,3) einen Treppenabsatz (6) aufweist und im Bereich des Treppenabsatzes (6) Markierungen (5) vorgesehen sind.

3. Flugzeug nach einem der Ansprüche 1 oder 2, **dadurch gekennzeichnet, dass** Markierungen (4,5) unterschiedlicher Farben und/oder Leuchtkraft verwendet werden.

4. Flugzeug nach einem der Ansprüche 1 bis 3, **dadurch gekennzeichnet, daß** die Markierungen (4,5) Hinweise wie Pfeile, andere Symbole oder Beschriftung aufweisen.
